# EUROPEAN PATENT SPECIFICATION

(11) **EP 4 600 011 B1**
(45) Date of publication and mention of the grant of the patent: **24.06.2026**
(21) Application number: 25150290.2
(22) Date of filing: 06.01.2025
(51) Int. Cl.: B29C 44/42, B29C 44/58, B29C 44/12, B29D 35/00, B29D 35/12, B29D 35/14, B29C 33/26, B29C 45/14

(54) **INJECTION MOLDING SYSTEM AND METHOD**
SPRITZGIESSSYSTEM UND VERFAHREN
SYSTÈME ET PROCÉDÉ DE MOULAGE PAR INJECTION

(30) Priority: 07.02.2024 US 202463550631 P; 03.09.2024 US 202418822509
(43) Date of publication of application: 13.08.2025
(73) Proprietor: King Steel Machinery Co., Ltd., Taichung City 407 (TW)
(72) Inventor: CHEN, Ching-Hao, 407 Taichung City (TW); LEE, Yi-Chung, 411 Taichung City (TW)
(74) Representative: Michalski Hüttermann & Partner mbB

(56) References cited:
- EP-A1- 4 140 687
- WO-A2-2023/101455
- AT-B- 291 817
- CN-U- 206 870 259
- KR-A- 20150 026 229

## Description

### CROSS-REFERENCE TO RELATED APPLICATION

The present application claims priority to U.S. Provisional Patent Application No. 63/550,631, filed on February 07, 2024, and U.S. Patent Application No. 18/822,509, filed on September 03, 2024.

### TECHNICAL FIELD

The present disclosure is related to an injection molding system and an injection molding method, and, in particular, to an injection molding system and an injection molding method for forming an article including multiple components.

### BACKGROUND

Foamed polymeric material has many advantages, such as high strength, low weight, impact resistance, thermal insulation, and others. Foamed articles can be made by injection molding or extrusion molding. For example, after the polymeric material is melted and mixed with a blowing agent to form a mixture, a force or pressure is applied to the mixture to inject or extrude the mixture into a cavity of a mold, and the mixture is foamed and cooled in the cavity to form the foamed article.

EP 4 140 687 A1 discloses an injection molding method and an injection molding system.

However, it is necessary to improve the formation of multiple articles (e.g. in a pair), and each article includes more than one component having different physical or functional properties. Therefore, there is a need for improvements to structures of the injection molding system and the method for making foamed articles.

### BRIEF SUMMARY OF THE DISCLOSURE

The present disclosure discloses an injection molding system and an injection molding method.

According to one embodiment of the present disclosure, an injection molding method is provided. The injection molding method includes: providing a molding device, wherein the molding device comprises a first mold, a second mold over the first mold, and a middle mold between the first mold and the second mold; disposing a first component on the second mold; engaging the middle mold with the first mold and the second mold to form a mold cavity after the first component is disposed on the second mold; injecting a polymeric material into the mold cavity to surround the first component; and obtaining an article formed by the polymeric material and the first component.

According to one embodiment of the present disclosure, an injection molding system is provided. The injection molding system includes a molding device, and the molding device includes a first mold, a second mold over the first mold, and a middle mold between the first mold and the second mold. The second mold includes a supporting unit extendable from and retractable into the second mold and facing the first mold. The middle mold comprises an outer middle mold and an inner middle mold surrounded by and movable relative to the outer middle mold.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 is a schematic perspective view of an injection molding system, in accordance with some embodiments of the present disclosure.
FIG. 2 is a schematic perspective view of the molding device in a closed configuration, in accordance with some embodiments of the present disclosure.
FIGs. 3A and 3B show a bottom-view and a front perspective view of the upper mold respectively, in accordance with some embodiments of the present disclosure.
FIGs. 4A and 4B show a top-view and a front perspective view of the molding device in an opened configuration respectively, in accordance with some embodiments of the present disclosure.
FIG. 5 is a schematic top view of an injection molding system, in accordance with some embodiments of the present disclosure.
FIG. 6 is a flowchart showing an injection molding method, in accordance with some embodiments of the present disclosure.
FIG. 7 is a top-view of the core component to be placed on the upper mold, in accordance with some embodiments of the present disclosure.
FIGs. 8A and 8B show respectively a bottom-view and a front perspective view of the upper mold on which the core component is configured (or placed), in accordance with some embodiments of the present disclosure.
FIG. 9 is a top-view of the bottom component to be placed on the lower mold, in accordance with some embodiments of the present disclosure.
FIGs. 10A and 10B show respectively a top-view and a front perspective view of the molding device on which the bottom component is configured (or placed), in accordance with some embodiments of the present disclosure.
FIGs. 11A and 11B show respectively a top-view and a front perspective view of the molding device on which the bottom component is configured (or placed), in accordance with some embodiments of the present disclosure.
FIGs. 12A, 12B and 12C show respectively a perspective view, a top-view and a front perspective view of the molding device to be closed respectively, in accordance with some embodiments of the present disclosure.
FIGs. 13A, 13B and 13C respectively show a perspective view, a front perspective view and a side perspective view of the molding device in the closed configuration, in accordance with some embodiments of the present disclosure.
FIGs. 14A and 14B respectively show a front perspective view and a side perspective view of the molding device on which a polymeric material is injected into the mold cavities to form an article, in accordance with some embodiments of the present disclosure.
FIG. 15 shows a perspective view of the article, in accordance with some embodiments of the present disclosure.
FIG. 16 shows a side perspective view of the molding device including an inner mold, in accordance with some embodiments of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above" "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages, such as those for quantities of materials, durations of times, temperatures, operating conditions, ratios of amounts, and the likes thereof disclosed herein, should be understood as modified in all instances by the term "about." Accordingly, unless indicated to the contrary, the numerical parameters set forth in the present disclosure and the attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

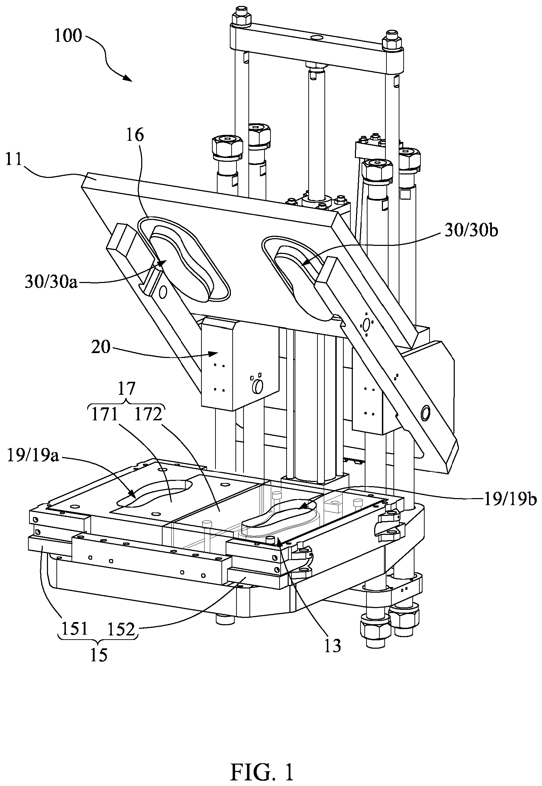

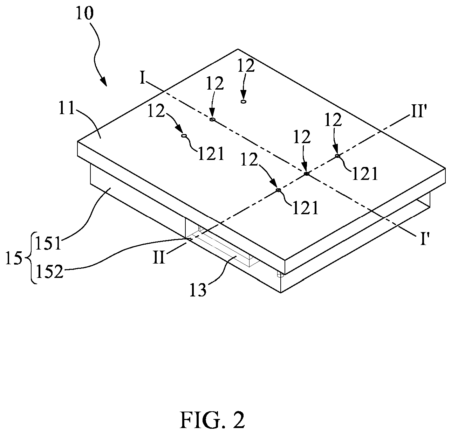

FIG. 1 is a schematic perspective view of an injection molding system 100, in accordance with some embodiments of the present disclosure. The injection molding system 100 includes a molding device 10 in an opened configuration. The injection molding system 100 further includes a position control mechanism 20 that is configured to control the molding device 10 in the opened configuration or a closed configuration as shown in FIG. 2. In some embodiments, the position control mechanism 20 is disposed adjacent to the molding device 10.

In some embodiments, the molding device 10 includes a upper mold 11, a lower mold 13, an outer middle mold (or a side mold) 15 disposed between the upper mold 11 and the lower mold 13, and multiple mold cavities 19 for forming the articles 30 defined by the upper mold 11, the lower mold 13 and the outer middle mold 15. For simplicity and clarity, two mold cavities 19a and 19b are illustrated, however, it can be understood that any suitable numbers of the mold cavities 19 can be configured in the molding device 10. In some embodiments, the upper mold 11 corresponds to the lower mold 13 in some configurations such as dimension, shape or the like. The upper mold 11 can be placed on and engaged with the outer middle mold 15. In some embodiments, the provision of the molding device 10 includes conveying the outer middle mold 15 towards the lower mold 13, and subsequently disposing the upper mold 11 over the outer middle mold 15, and these movements is controlled by the position control mechanism 20. In some embodiments, the upper mold 11 is aligned with the lower mold 13. In some embodiments, the upper mold 11 is disposed over, moveable relative to and engageable with the outer middle mold 15, and the outer middle mold 15 is disposed over, moveable relative to and engageable with the lower mold 13.

In some embodiments, the upper mold 11 includes multiple feeding ports 12. In some embodiments, each feeding port 12 extends through the upper mold 11, and the feeding port 12 has an opening 121 disposed on a top surface of the upper mold 11. In some embodiments, the feeding port 12 is communicable with the mold cavity 19 when the molding device 10 is in the closed configuration.

In some embodiments, the mold cavity 19 is accessible through the feeding port 12. For simplicity and clarity, six feeding ports 12 are illustrated on the top surface of the upper mold 11 in FIG. 2. However, it can be understood that any suitable numbers of the feeding port 12 can be configured at the upper mold 11. In some embodiments, instead of configuring the feeding port 12 at the upper mold 11, the feeding port 12 is disposed at the lower mold 13 or the outer middle mold 15 for accessing the mold cavity 19. In some embodiments, the feeding port 12 may be configured at any other suitable positions as long as the feeding port 12 is communicable with the mold cavity 19. For example, a portion of feeding ports 12 are disposed at the upper mold 11, and the remaining feeding ports 12 are disposed at the lower mold 13 and/or the outer middle mold 15.

In some embodiments, the injection molding system 100 further includes an extruding system (not shown) and a discharging channel (not shown) disposed over the molding device 10. In some embodiments, the extruding system is configured to produce a mixture of a polymeric material and a blowing agent. In some embodiments, the discharging channel is communicable with the extruding system and including an outlet disposed away from the extruding system and configured to discharge the mixture into the molding device 10 through the feeding port 12. In some embodiments, the molding device 10 is configured to receive the mixture from the outlet of the discharging channel. In some embodiments, the feeding port 12 is communicable with the mold cavity 19 and engageable with the outlet.

In the embodiments of the present disclosure, a side perspective view of the components of the molding device 10 is obtained along line I-I' of FIG. 2, and a front perspective view of the components of the molding device 10 is obtained along line II-II' of FIG. 2.

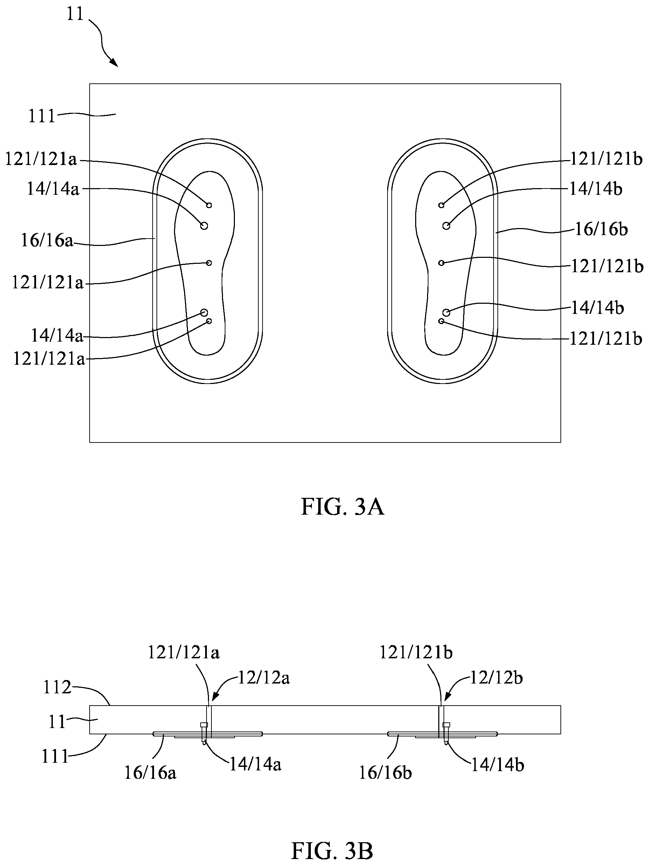

FIGs. 3A and 3B show a bottom-view and a front perspective view of the upper mold 11 respectively, in accordance with some embodiments of the present disclosure. The upper mold 11 has a bottom surface 111 and a top surface 112. When the molding device 10 is in a closed configuration, the bottom surface 111 of the upper mold 11 faces the outer middle mold 15. Two sealing rings 16 are disposed on the bottom surface 111 of the upper mold 11. Two sealing rings 16 includes a first sealing ring 16a and a second sealing ring 16b separated from each other. In some embodiments, the number of sealing rings 16 is identical to the number of mold cavities 19. Each sealing ring 16 corresponds to individual mold cavity 19.

In some embodiments, the upper mold 11 has multiple feeding ports 12. In some embodiments, the feeding ports 12 include one or more first feeding ports 12a and one or more second feeding ports 12b. From a bottom view, the first feeding ports 12a are disposed within the first sealing ring 16a, and the second feeding ports 12b are disposed within the second sealing ring 16b as shown in FIG. 3A. Each first feeding port 12a has a first opening (or a first sprue) 121a configured at the upper mold 11. Each first opening 121a is configured to extend through the upper mold 11, and is communicable with the first mold cavity 19a when the molding device 10 is in the closed configuration. Each second feeding port 12b has a second opening (or a second sprue) 121b configured at the upper mold 11. The second opening 121b is configured to extend through the upper mold 11, and is communicable with the second mold cavity 19b when the molding device 10 is in the closed configuration. In some embodiments, the number of first feeding ports 12a is equal to the number of second feeding ports 12b. In some embodiments, the first openings 121a are arranged in a first straight line (not shown) with the same pitch, and the second openings 121b are arranged in a second straight line (not shown) with the same pitch. In some embodiments, the second straight line is parallel to the first straight line. The embodiment of FIG. 3A illustrates three first openings 121a and three second openings 121b, however it is not intended to limit the number of openings 121 in the upper mold 11.

In some embodiments, the upper mold 11 has multiple supporting units 14. One end of each supporting unit 14 is inside the upper mold 11, and the other end of each supporting unit 14 protrudes from the bottom surface 111 of the upper mold 11. In some embodiments, the supporting units 14 are nails, screws or pillars. In some embodiments, the supporting units 14 include one or more first supporting units 14a and one or more second supporting units 14b. The protruding portion of the first supporting unit 14a is disposed within the first sealing ring 16a from a bottom view, and the protruding portion of the second supporting unit 14b is disposed within the second sealing ring 16b from a bottom view, as shown in FIG. 3A. In some embodiments, the number of first supporting units 14a is equal to the number of second supporting units 14b. In some embodiments, the first supporting units 14a are arranged in a third straight line (not shown) with the same pitch, and the second supporting units 14b are arranged in a fourth straight line (not shown) with the same pitch. In some embodiments, the fourth straight line is parallel to the third straight line and/or the first and second straight lines of the openings 121. The embodiment of FIG. 3A illustrates two first supporting units 14a and two second supporting units 14b, however it is not intended to limit the number of supporting units 14 in the upper mold 11.

In some embodiments, the third and fourth straight lines of the supporting units 14 overlap the first and second straight lines of the openings 121. In some embodiments, the third and fourth straight lines of the supporting units 14 do not overlap the first and second straight lines of the openings 121. In some embodiments, the number of supporting units 14 is less than the number of feeding port 12. In some embodiments, the number of supporting units 14 is identical to the number of feeding port 12. In some embodiments, each supporting unit 14 is arranged between the openings 121 of two adjacent feeding ports 12 from a bottom view. For example, each first supporting unit 14a is arranged between the two adjacent first openings 121a, and each second supporting unit 14b is arranged between the two adjacent second openings 121b, as shown in FIG. 3A.

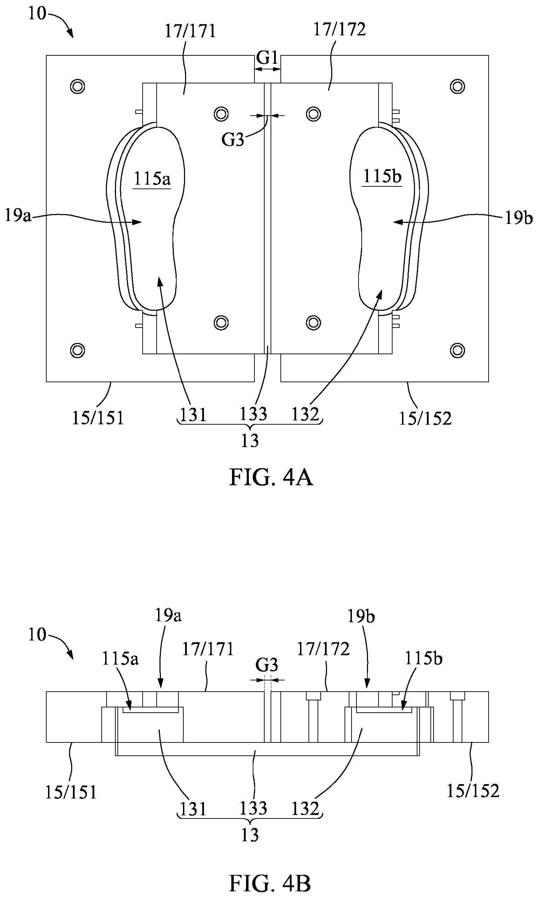

FIGs. 4A and 4B show a top-view and a front perspective view of the molding device 10 in an opened configuration respectively, in accordance with some embodiments of the present disclosure. In FIGs. 4A and 4B, the outer middle mold 15 and the lower mold 13 of the molding device 10 are shown.

The outer middle mold 15 includes a first portion 151 and a second portion 152. The first portion 151 and a first slider 171 are adjacent to and engagable with each other, and the second portion 152 and a second slider 172 are adjacent to and engagable with each other. In some embodiments, the first portion 151 and the second portion 152 are movable and detachable, and the first slider 171 and the second slider 172 are movable and detachable. In some embodiments, the second portion 152 and the first portion 151 are moveable relative to each other, and the first slider 171 and the second slider 172 are moveable relative to each other. In some embodiments, the first slider 171 and the second slider 172 are an inner middle mold 17 of the molding device 10.

In some embodiments, the lower mold 13 includes a first portion 131, a second portion 132 and a third portion 133. The first portion 131 and second portion 132 are disposed on two opposite sides of the third portion 133. In some embodiments, a first recess 115a is formed on the first portion 131, and a second recess 115b is formed on the second portion 132. The first slider 171 and the second slider 172 are disposed over the third portion 133 and between the first portion 131 and the second portion 132. In some embodiments, the first portion 151 of the outer middle mold 15 and the first slider 171 are disposed over the first portion 131 of the lower mold 13, and the second portion 152 of the outer middle mold 15 and the second slider 172 are disposed over the second portion 132 of the lower mold 13. In some embodiments, the first slider 171 is at least partially surrounded by the first portion 151 of the outer middle mold 15, and the second slider 172 is at least partially surrounded by the second portion 152 of the outer middle mold 15.

In some embodiments, when the molding device 10 is in a closed configuration, the upper mold 11, the first portion 131 of the lower mold 13, the first portion 151 of the outer middle mold 15 and the first slider 171 define the first mold cavity 19a, and the upper mold 11, the second portion 132 of the lower mold 13, the second portion 152 of the outer middle mold 15 and the second slider 172 define the second mold cavity 19b. In some embodiments, the first portion 151 of the outer middle mold 15 and the first slider 171 are attached to and engaged with each other to seal the first mold cavity 19a when the molding device 10 is in the closed configuration. Similarly, the second portion 152 of the outer middle mold 15 and the second slider 172 are attached to and engaged with each other to seal the second mold cavity 19b when the molding device 10 is in the closed configuration.

In some embodiments, the outer middle mold 15 and the inner middle mold 17 are separated from each other when the molding device 10 is in the opened configuration. For example, the first portion 151 of the outer middle mold 15 and the first slider 171 are separated from each other when the molding device 10 is in the opened configuration, and the article 30a formed in the first mold cavity 19a may be easily removed from the first mold cavity 19a. Similarly, the second portion 152 of the outer middle mold 15 and the second slider 172 are separated from each other when the molding device 10 is in the opened configuration, and the article 30b formed in the second mold cavity 19b may be easily removed from the second mold cavity 19b. When the molding device 10 is in the opened configuration, the first recess 115a and the second recess 115b on the lower mold 13 are exposed. In some embodiments, the article 30 is removed from the molding device 10 by human or a robot arm (not shown).

In some embodiments, when the molding device 10 is in the opened configuration, there is a gap G1 between the first portion 151 and the second portion 152. In some embodiments, the first portion 151 is sided away from the first slider 171 to extend the first mold cavity 19a, and the second portion 152 is sided away from the second slider 172 to extend the second mold cavity 19b. In some embodiments, the first portion 151 and the first slider 171 are away from each other to extend the first mold cavity 19a, and the second portion 152 and the second slider 172 are away from each other to extend the second mold cavity 19b. In some embodiments, the mold cavities 19a and 19b are extended when the molding device 10 is in the opened configuration.

In some embodiments, when the molding device 10 is in the opened configuration, there is a gap G3 between the first slider 171 and the second slider 172. In some embodiments, the gap G3 is less than the gap G1. In some embodiments, the gap G3 is absent between the first slider 171 and the second slider 172, i.e., the first slider 171 is in contact with the second slider 172.

In some embodiments, movement of the upper mold 11 and the outer middle mold 15 is controlled by the position control mechanism 20 of FIG. 1. In some embodiments, the position control mechanism 20 connects or attaches to the upper mold 11 and the outer middle mold 15. In some embodiments, the upper mold 11 is moveable toward the outer middle mold 15 and the lower mold 13 by the position control mechanism 20. In some embodiments, the position control mechanism 20 drives or actuates the upper mold 11 to move away from the outer middle mold 15 so that the molding device 10 is in the opened configuration. It can be understood that a maximum displacement of the upper mold 11 is limited by the position control mechanism 20. In some embodiments, the position control mechanism 20 is configured to move the outer middle mold 15 over the lower mold 13 and then dispose the upper mold 11 over the outer middle mold 15 so as to engage the outer middle mold 15 with the upper mold 11 and the lower mold 13.

In some embodiments, the position control mechanism 20 is configured to drive or actuate the upper mold 11 to move upward when the molding device 10 is in the opened configuration. In some embodiments, the position control mechanism 20 is configured to generate a relative movement between the upper mold 11 and the outer middle mold 15. In some embodiments, the position control mechanism 20 is used to separate the first portion 151 and the second portion 152 of the outer middle mold 15 when the molding device 10 is in the opened configuration. In some embodiments, the position control mechanism 20 is configured to generate a relative movement between the first portion 151 of the outer middle mold 15 and the first slider 171 and a relative movement between the second portion 152 of the outer middle mold 15 and the second slider 172.

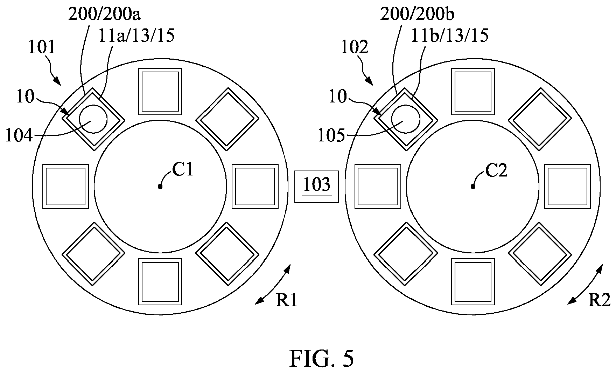

FIG. 5 is a schematic top view of an injection molding system, in accordance with some embodiments of the present disclosure. In FIG. 5, the injection molding system includes a first carrier 101 and a second carrier 102 disposed adjacent to the first carrier 101. In some embodiments, the first carrier 101 and the second carrier 102 are in an annular shape respectively. In some embodiments, the first carrier 101 is rotatable about a first center C1 and along a first direction R1, and the second carrier 102 is rotatable about a second center C2 and along a second direction R2. In some embodiments, each of the first carrier 101 and the second carrier 102 is rotatable in clockwise or anticlockwise. The first carrier 101 and the second carrier 102 are rotated in the first direction R1 and the second direction R2, respectively. In some embodiments, the first carrier 101 and the second carrier 102 are rotated at a predetermined interval. In some embodiments, the first carrier 101 and the second carrier 102 are rotated independently or simultaneously. In some embodiments, the first direction R1 and the second direction R2 can be same as or different from each other. In some embodiments, the first carrier 101 and the second carrier 102 are operated and controlled automatically. In some embodiments, the first carrier 101 and the second carrier 102 communicable with each other through any suitable communication protocol such as programmable logic control (PLC) protocol or the like.

In some embodiments, multiple molding stations 200 are configured at the first carrier 101 and the second carrier 102. In some embodiments, the molding stations 200 include multiple first molding stations 200a configured at the first carrier 101, and multiple second molding stations 200b configured at the second carrier 102. In some embodiments, the molding device10 including a first upper mold 11a, the outer middle mold 15 and the lower mold 13 is disposed in the first molding station 200a, and the molding device 10 including a second upper mold 11b, the outer middle mold 15 and the lower mold 13 is disposed in the second molding station 200b. In some embodiments, the first upper mold 11a and the second upper mold 11b are in different configurations. In some embodiments, the outer middle molds 15 and the lower molds 13 at the first molding stations 200a and the outer middle molds 15 and the lower molds 13 at the second molding stations 200b are in same configurations.

In FIG. 5, the injection molding system further includes a first injector 104 adjacent to the first carrier 101, and a second injector 105 adjacent to the second carrier 102. The first injector 104 is disposed over one of the first molding stations 200a and is configured to discharge a first polymeric material into the mold cavities 19 defined by the lower mold 13, the outer middle mold 15 and the first upper mold 11a of the one of the first molding stations 200a. Similarly, the second injector 105 is disposed over one of the second molding stations 200b and is configured to discharge a second polymeric material into the mold cavities 19 defined by the lower mold 13, the outer middle mold 15 and the second upper mold 11b of the one of the second molding stations 200b. In some embodiments, the first polymeric material may flow from the first injector 104 into the first mold cavity 19a and the second mold cavity 19b through the first feeding ports 12a and the second feeding ports 12b of the first upper mold 11a, and the second polymeric material may flow from the second injector 105 into the first mold cavity 19a and the second mold cavity 19b through the first feeding ports 12a and the second feeding ports 12b of the second upper mold 11b.

In some embodiments, the injection molding system 100 includes a bridging mechanism 103 disposed between the first carrier 101 and the second carrier 102. The bridging mechanism 103 is configured to connect the first carrier 101 with the second carrier 102 and to convey the lower mold 13 and the outer middle mold 15 from the first carrier 101 to the second carrier 102 or from the second carrier 102 to the first carrier 101. In some embodiments, the bridging mechanism 103 is removable and detachable from the injection molding system in FIG. 5. The bridging mechanism 103 is operable independent from the first carrier 101 and the second carrier 102.

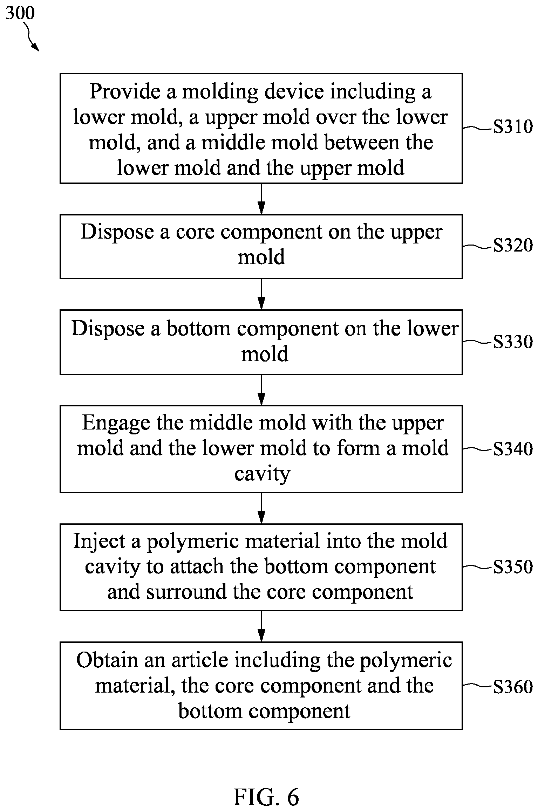

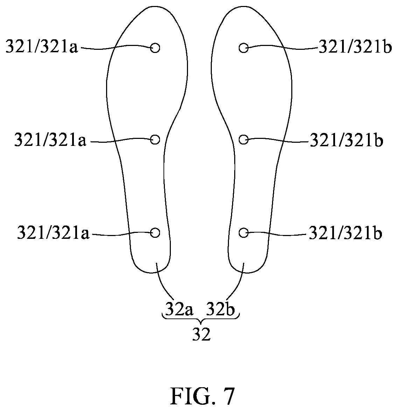

FIG. 6 is a flowchart showing an injection molding method 300, in accordance with some embodiments of the present disclosure. The injection molding method 300 includes the operations S310 through S360, and the description and illustrations are not deemed as a limitation of the sequence of the operations S310 through S360. FIGs. 7-16 are schematic top, perspective or cross-sectional views of various stages of the injection molding method 300. In some embodiments, the operations of the injection molding method 300 can be repeated and performed automatically. In some embodiments, the injection molding method 300 is performed by the injection molding system 100 of FIG. 1 and the injection molding system of FIG. 5.

In operation S310, the molding device 10 is provided, and the molding device 10 includes the upper mold 11, the lower mold 13, the outer middle mold 15 disposed between the upper mold 11 and the lower mold 13. In operation S320, a core component 32 is disposed on the upper mold 11. In operation S330, a bottom component 34 is disposed on the lower mold 13. In operation 340, the outer middle mold 15 is engaged with the upper mold 11 and the lower mold 13 to form a mold cavity 19. In operation S350, a polymeric material is injected into the mold cavity 19 to attach the bottom component and surround the core component. In operation S360, an article is obtained from the mold cavity 19, and the article includes the polymeric material, the core component and the bottom component. In some embodiments, the execution order of operations S320 and S330 can be exchanged. The core component 32 and the bottom component 34 will be described later.

In order to illustrate concepts and the injection molding method 300 of the present disclosure, various embodiments are provided below. However, the present disclosure is not intended to be limited to specific embodiments. In addition, elements, conditions or parameters illustrated in different embodiments can be combined or modified to form different combinations of embodiments as long as the elements, parameters or conditions used are not in conflict. For ease of illustration, reference numerals with similar or same functions and properties are repeated in different embodiments and figures.

As described above, the molding device 10 further includes the inner middle mold 17, and the inner middle mold 17 includes the first slider 171 and the second slider 172. In some embodiments, the molding device 10 includes more than two mold cavities 19. In some embodiments, the first mold cavity 19a is defined by the upper mold 11, the lower mold 13, the first slider 171, and the first portion 151 of the outer middle mold 15, and the second mold cavity 19b is defined by the upper mold 11, the lower mold 13, the second slider 172, and the second portion 152 of the outer middle mold 15.

FIG. 7 is a top-view of the core component 32 to be placed on the upper mold 11, in accordance with some embodiments of the present disclosure. In some embodiments, the core component 32 has one or more openings 321. The core component 32 includes a first core component 32a and a second core component 32b. In some embodiments, the core component 32 is a pair of insoles, a pair of air cushion insoles, a pair of foot pads or any other suitable component of the footwear. In some embodiments, the first core component 32a is a left foot insole, and the second core component 32b is a right foot insole. In some embodiments, the number of openings 321a of the first core component 32a is equal to the number of openings 321b of the second core component 32b.

In some embodiments, the openings 321a are arranged in a fifth straight line (not shown) with the same pitch, and the openings 321b are arranged in a sixth straight line (not shown) with the same pitch. In some embodiments, the fifth straight line is parallel to the sixth straight line. The embodiment of FIG. 7 illustrates three openings 321a and three second openings 321b, however it is not intended to limit the number of openings 321 in the core component 32.

In some embodiments, the core component 32 includes a polymeric material such as ethylene vinyl acetate (EVA), styrene-ethylene-butylene-styrene (SEBS), thermoplastic polyurethanes (TPU), thermoplastic polyester elastomer (TPEE) or the like. In some embodiments, the core component 32 is a non-foamable piece. In some embodiments, the core component 32 includes a recyclable material. Alternatively, in some embodiments, the core component 32 is a foamed piece. In some embodiments, the foamed piece includes a polymeric material and a blowing agent. In some embodiments, a stiffness of the non-foamable piece is greater than a stiffness of the foamed piece.

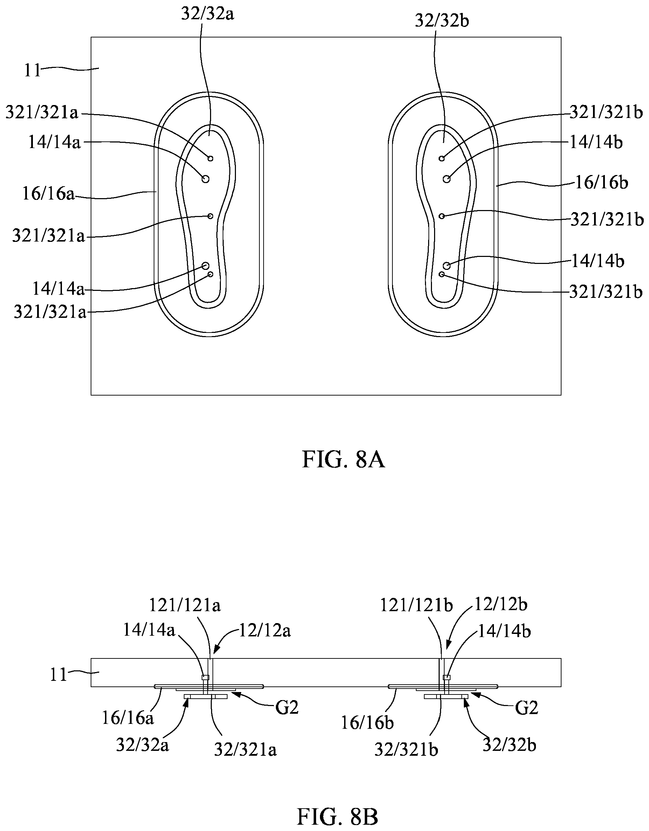

FIGs. 8A and 8B show respectively a bottom-view and a front perspective view of the upper mold 11 on which the core component 32 is configured (or placed), in accordance with some embodiments of the present disclosure. In some embodiments, the first core component 32a is fixed on the upper mold 11 through the first supporting units 14a, and the second core component 32b is fixed on the upper mold 11 through the second supporting units 14b. In some embodiments, the supporting units 14 do not penetrate the core component 32. In some embodiments, the supporting units 14 penetrate the core component 32. In some embodiments, each supporting unit 14 is at least partially surrounded by the core component 32.

In some embodiments, there is a gap G2 between the upper mold 11 and the core component 32 when the core component 32 is fixed by the supporting units 14. In some embodiments, the upper mold 11 further includes the inner core, and there is the gap G2 between the inner core of the upper mold 11 and the core component 32. In some embodiments, the openings 321 of the core component 32 overlap the openings 121 of the upper mold 11 when the core component 32 is disposed on the upper mold 11. For example, when the first core component 32a is disposed on the upper mold 11 by the first supporting units 14a, the openings 321a of the first core component 32a may completely or partially overlap the openings 121a of the upper mold 11 from a bottom view. Similarly, when the second core component 32b is disposed on the upper mold 11 by the second supporting units 14b, the openings 321b of the second core component 32b may completely or partially overlap the openings 121b of the upper mold 11 from a bottom view. In some embodiments, the openings 321 of the core component 32 do not overlap the openings 121 of the upper mold 11. In some embodiments, the core component 32 is disposed on the upper mold 11 by human or a robot arm (not shown).

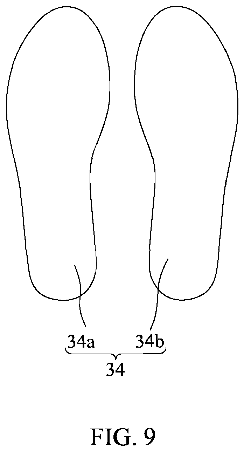

FIG. 9 is a top-view of the bottom component 34 to be placed on the lower mold 13, in accordance with some embodiments of the present disclosure. In some embodiments, the bottom component 34 includes a first bottom component 34a and a second bottom component 34b. In some embodiments, the bottom component 34 is a pair of outsoles, a pair of foot pads or any other suitable component of the footwear. In some embodiments, the first bottom component 34a is a left foot outsole, and the second bottom component 34b is a right foot outsole.

In some embodiments, the bottom component 34 includes a polymeric material such as EVA, SEBS, TPU, TPEE or the like. In some embodiments, the bottom component 34 includes a recyclable material. In some embodiments, the bottom component 34 is non-foamable or foamable. In some embodiments, the bottom component 34 further includes a blowing agent. In some embodiments, the blowing agent can be any type of chemical or physical blowing agent known to those of ordinary skill in the art. In some embodiments, the blowing agent is a supercritical fluid. The supercritical fluid may include inert gas such as carbon dioxide or nitrogen in supercritical state. In some embodiments, the bottom component 34 is made from a molding material including a polymeric material and a blowing agent.

In some embodiments, the material of the core component 32 shown in FIG. 7 is different from the material of the bottom component 34. In some embodiments, a thickness of the core component 32 is less than a thickness of the bottom component 34. In some embodiments, an area of core component 32 is less than an area of bottom component 34. For example, the area of first core component 32a is smaller than the area of first bottom component 34a. In some embodiments, the core component 32 and the bottom component 34 have similar contours, and the perimeter of core component 32 is less than the perimeter of bottom component 34.

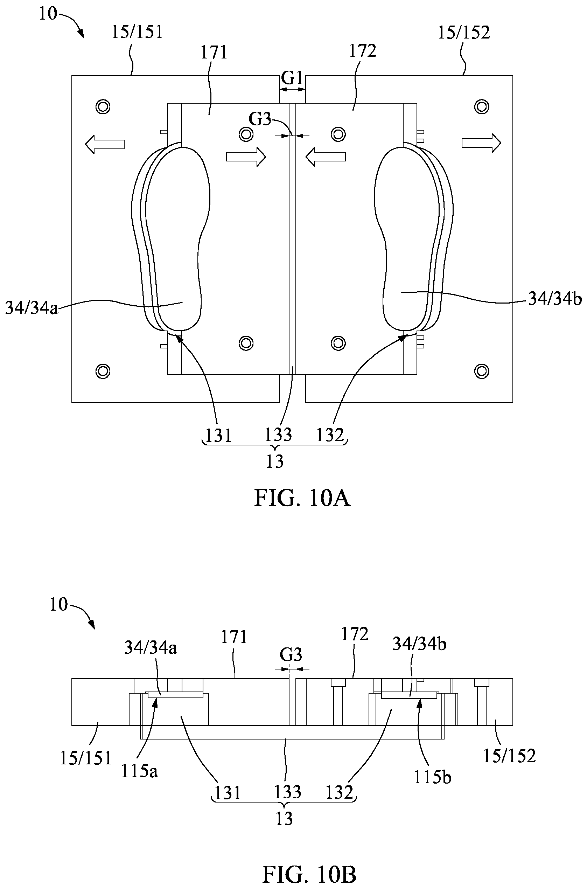

FIGs. 10A and 10B show respectively a top-view and a front perspective view of the molding device 10 on which the bottom component 34 is configured (or placed), in accordance with some embodiments of the present disclosure. In FIGs. 10A and 10B, the outer middle mold 15, the sliders 171 and 172, and the lower mold 13 of the molding device 10 are shown, and the outer middle mold 15 is in an opened configuration. Furthermore, the bottom component 34 is disposed on the lower mold 13.

In some embodiments, the first portion 151 and the second portion 152 of the outer middle mold 15 are moved away from each other to form the gap G1 between the first portion 151 and the second portion 152 when the outer middle mold 15 is opened. In some embodiments, after the first portion 151 is away from the second portion 152, the first slider 171 and the second slider 172 move closer to each other, and the bottom component 34 thereby may be easily to put on the lower mold 13.

In some embodiments, the first bottom component 34a is disposed in the first recess 115a, and the second bottom component 34b is disposed in the second recess 115b. In some embodiments, the first bottom component 34a contoured to match the shape of the first recess 115a, and the second bottom component 34b contoured to match the shape of the second recess 115b. For example, the first recess 115a completely fills the first bottom component 34a and the second recess 115b completely fills the second bottom component 34b. In some embodiments, the contour of the first bottom component 34a is smaller than the shape of the first recess 115a, and the contour of the second bottom component 34b is smaller than the shape of the second recess 115b. For example, the first bottom component 34a does not completely fill the first recess 115a, and the second bottom component 34b does not completely fill the second recess 115b. In some embodiments, the bottom component 34 is disposed on the lower mold 13 by human or a robot arm (not shown).

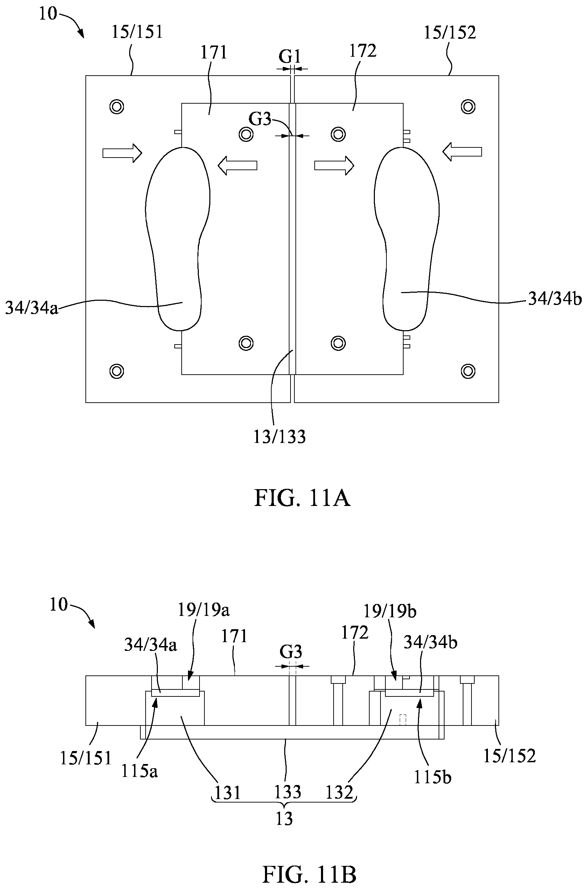

FIGs. 11A and 11B show respectively a top-view and a front perspective view of the molding device 10 on which the bottom component 34 is configured (or placed), in accordance with some embodiments of the present disclosure. In FIGs. 11A and 11B, the outer middle mold 15, the sliders 171/172 and the lower mold 13 of the molding device 10 are shown, and the outer middle mold 15 is in a closed configuration.

In some embodiments, after the bottom component 34 is disposed on the lower mold 13, the first portion 151 and the second portion 152 of the outer middle mold 15 move to engage such that the gap G1 between the first portion 151 and the second portion 152 is decreased when the outer middle mold 15 is closed. In some embodiments, after first portion 151 engages the second portion 152, the first slider 171 and the second slider 172 move away from each other, so that the first slider 171 moves to engage the first portion 151 and the second slider 172 moves to engage the second portion 152, and then the gap G3 is increased. In some embodiments, when the outer middle mold 15 is in a closed configuration, only a portion of the third portion 133 of the lower mold 13 is exposed from a top view. For example, the third portion 133 is exposed from the gap G3 between the first slider 171 and the second slider 172. In some embodiments, the gap G1 is less than or equal to the gap G3 when the outer middle mold 15 is in a closed configuration.

In some embodiments, when the outer middle mold 15 is in the closed configuration, a bottom surface of the first mold cavity 19a is defined by the first bottom component 34a, and a side of the first mold cavity 19a is defined by the engaged first portion 151 of the outer middle mold 15 and the engaged first slider 171. Similarly, a bottom surface of the second mold cavity 19b is defined by the second bottom component 34b, and a side of the second mold cavity 19b is defined by the engaged second portion 152 of the outer middle mold 15 and the engaged second slider 172.

In some embodiments, the movement of the first portion 151 and the second portion 152 is controlled by the position control mechanism 20, and the gap G1 is also controlled by the position control mechanism 20. In some embodiments, when the first portion 151 and the second portion 152 move, the first slider 171 and the second slider 172 may move accordingly. In some embodiments, the slight movement of the first slider 171 and the second slider 172 is controlled by the position control mechanism 20, and the gap G3 is also controlled by the position control mechanism 20.

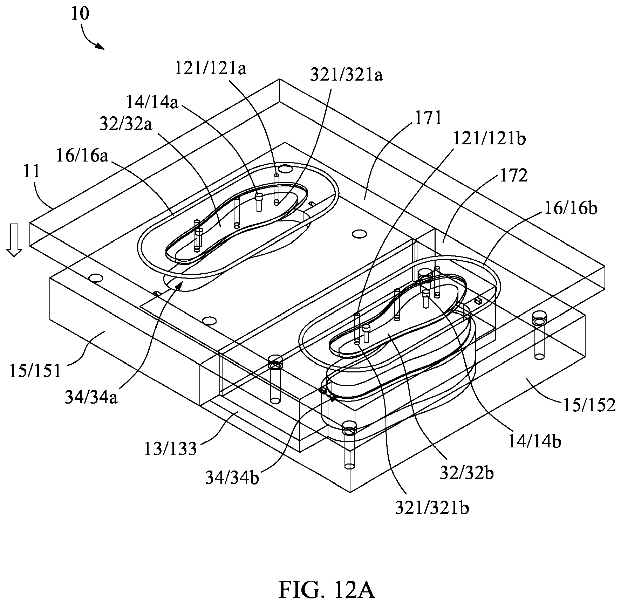

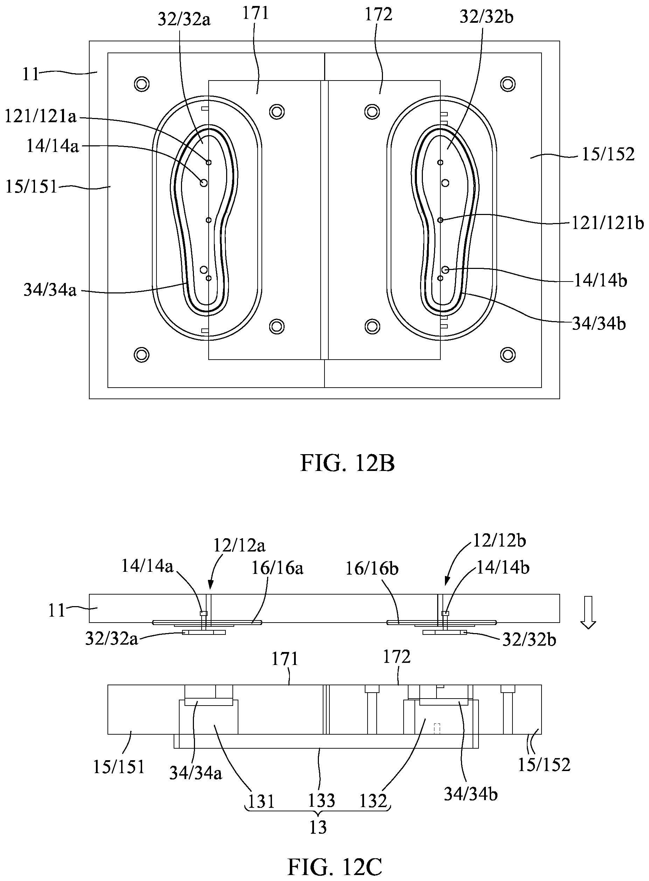

FIGs. 12A, 12B and 12C show respectively a perspective view, a top-view and a front perspective view of the molding device 10 to be closed respectively, in accordance with some embodiments of the present disclosure.

In some embodiments, after the bottom component 34 is disposed on the lower mold 13, the position control mechanism 20 is configured to drive or actuate the upper mold 11 on which the core component 32 is disposed to move downward, so as to close the molding device 10.

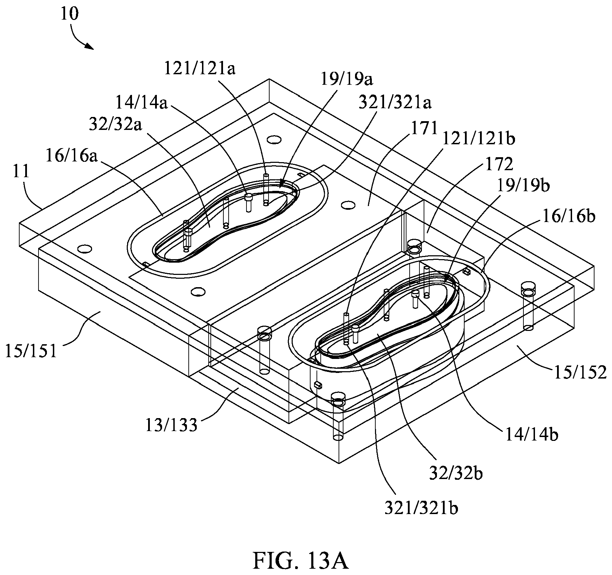

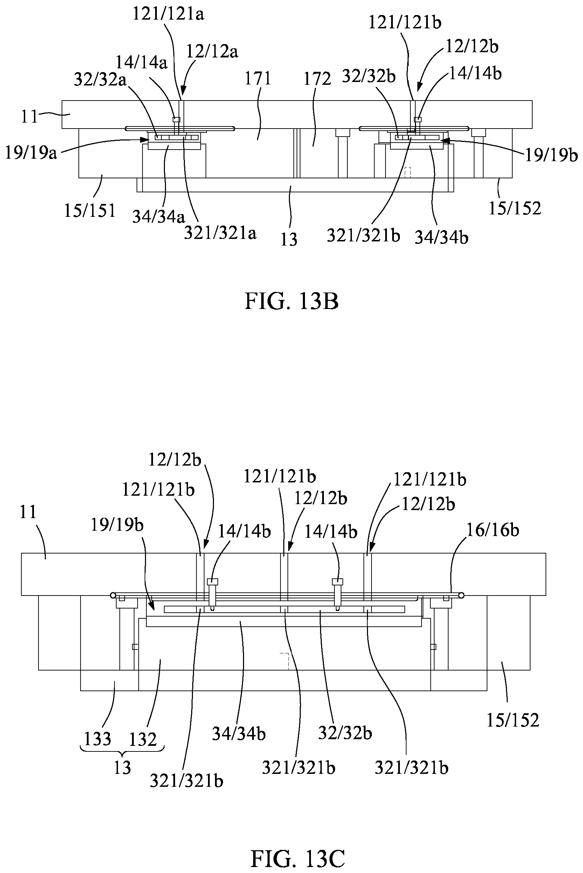

FIGs. 13A, 13B and 13C respectively show a perspective view, a front perspective view and a side perspective view of the molding device 10 in the closed configuration, in accordance with some embodiments of the present disclosure.

In some embodiments, when the molding device 10 is in the closed configuration, the mold cavities 19 are formed, and each core component 32 is disposed in the corresponding mold cavity 19 without contacting the outer middle mold 15, the sliders 171 or 172, the lower mold 13 and the bottom component 34. In some embodiments, the first mold cavity 19a is defined by the upper mold 11, the first bottom component 34a, the first portion 151 of the outer middle mold 15 and the first slider 171, and the first core component 32a is disposed within the first mold cavity 19a and is suspended by the first supporting units 14a. In some embodiments, the second mold cavity 19b is defined by the upper mold 11, the second bottom component 34b, the second portion 152 of the outer middle mold 15 and the second slider 172, and the second core component 32b is disposed within the second mold cavity 19b and is suspended by the second supporting units 14b. In some embodiments, the first core component 32a completely overlaps the first bottom component 34a, and the second core component 32b completely overlaps the second bottom component 34b.

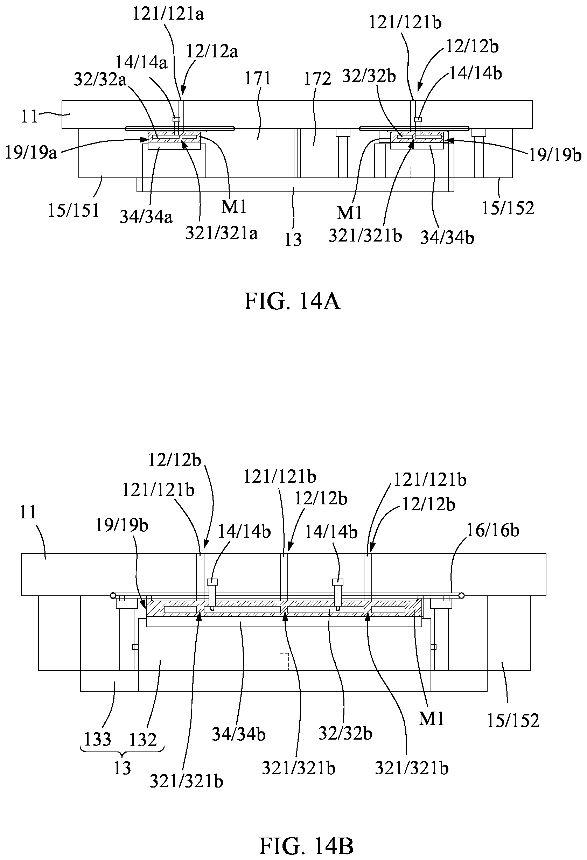

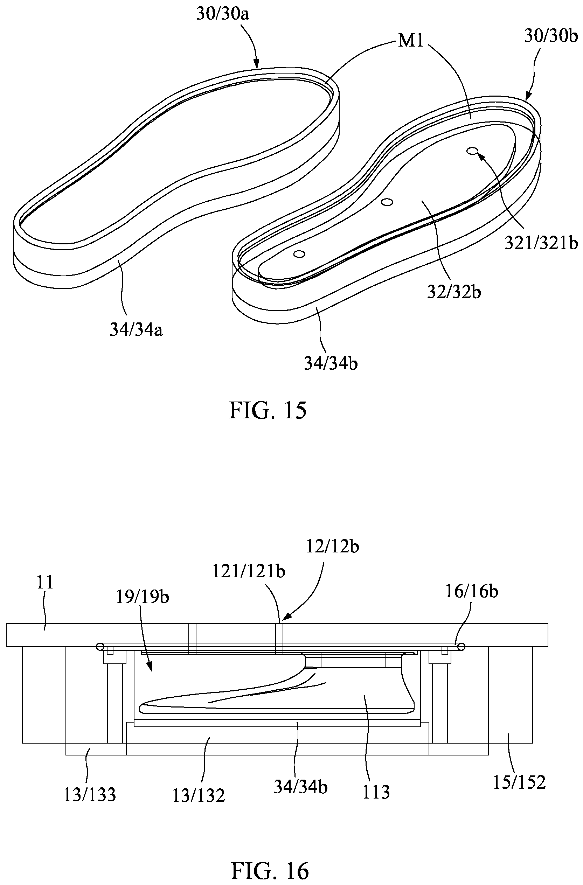

FIGs. 14A and 14B respectively show a front perspective view and a side perspective view of the molding device 10 on which a polymeric material M1 is injected into the mold cavities 19 to form an article 30, in accordance with some embodiments of the present disclosure. FIG. 15 shows a perspective view of the article 30, in accordance with some embodiments of the present disclosure.

In some embodiments, the polymeric material M1 is injected into the first mold cavity 19a through the openings 121a of the first feeding ports 12a to form the article 30a, and the polymeric material M1 is injected into the second mold cavity 19b through the openings 121b of the second feeding ports 12b to form the article 30b. In some embodiments, the polymeric material M1 includes thermoplastic polyurethane (TPU), polyurethane (PU), plastics or any other suitable materials. In some embodiments, the polymeric material includes a physical blowing agent such as supercritical fluid. In some embodiments, the physical blowing agent is gaseous nitrogen, carbon dioxide, etc. In some embodiments, the polymeric material M1 is foamable, non-foamable or slightly foamable. In some embodiments, the polymeric material M1 includes a dye. In some embodiments, the core component 32 has higher density than the bottom component 34 and the polymeric material M1. In some embodiments, the polymeric material M1 forms a layer that completely fills the first mold cavity 19a and the second mold cavity 19b. In some embodiments, more than one polymeric material is injected into the first mold cavity 19a and the second mold cavity 19b. In some embodiments, different polymeric materials are simultaneously injected into the first mold cavity 19a and the second mold cavity 19b, respectively.

In some embodiments, the polymeric material M1 is injected into the mold cavity 19 to attach the bottom component 34. In some embodiments, the polymeric material M1 flows to the bottom component 34 through the openings 321 of the core component 32. In some embodiments, the core component 32 is completely surrounded by the polymeric material M1. In some embodiments, multiple polymeric materials are sequentially injected into the mold cavity 19 to form multiple material layers in the mold cavity 19, and the core component 32 is disposed between the different material layers.

In some embodiments, a gap G2 (as shown in FIG. 8B) between the upper mold 11 and the core component 32 is zero, and the polymeric material M1 partially surrounds the core component 32. For example, the polymeric material M1 surrounds the bottom and sides of the core component 32 so that the top of the core component 32 is exposed in the article 30.

In some embodiments, different polymer materials are injected into the mold cavity 19 through individual feeding ports 12. For example, referring to FIG. 14B, a first polymer material is injected into the mold cavity 19b through the opening 121b of the left side feeding port 12b, a second polymer material is injected into the mold cavity 19b through the opening 121b of the middle feeding port 12b, and a third polymer material is injected into the mold cavity 19b through the opening 121b of the right side feeding port 12b.

In some embodiments, the polymeric material M1 is injected into the mold cavity 19 further through the feeding ports (not shown) of the outer middle mold 15.

In some embodiments, the supporting units 14 are telescopic or movable, and the supporting units 14 are retracted into the upper mold 11 and thus separated from the core component 32 after the injection of the polymeric material M1 into the mold cavity 19 or after the core component 32 is surrounded by the polymeric material M1.

In some embodiments, after the article 30a and 30b are formed within the molding device 10, the article 30a and 30b are removed from the first mold cavity 19a and the second mold cavity 19b, respectively. In some embodiments, the molding device 10 is in an opened configuration while removing the article 30. In some embodiments, the article 30 includes the bottom component 34 and a top component formed by the core component 32 and the polymeric material M1. In some embodiments, the bottom component 34 is separated from the core component 32 by the polymeric material M1. In some embodiments, the article 30 is free from adhesive.

In some embodiments, after the article 30 is formed, the upper mold 11 is disengaged from the outer middle mold 15 and the lower mold 13, so that the article 30 can be taken out from the outer middle mold 15 and the lower mold 13. In some embodiments, before moving the upper mold 11 and the article 30 away from the outer middle mold 15, the first portion 151 and the second portion 152 of the outer middle mold 15 are moved away from each other to increase the gap G1 between the first portion 151 and the second portion 152 as shown in FIG. 10A, and the article 30 thereby may be separated from the outer middle mold 15 and be easily to remove from the mold cavity 19.

In some embodiments, the upper mold 11 further includes the inner core. In some embodiments, the mold cavity is defined by the inner core of the upper mold 11, the lower mold 13, the outer middle mold 15 and the slider 171 or 172. In some embodiments, the top surface of the article 30 has a recess formed by the inner core of the upper mold 11.

FIG. 16 shows a side perspective view of the molding device 10 including an inner mold 113, in accordance with some embodiments of the present disclosure. In some embodiments, the inner mold 113 is attached to the upper mold 11 when the molding device 10 in an opened configuration. In some embodiments, the mold cavity 19 is defined by the inner mold 113, the upper mold 11, the lower mold 13, the outer middle mold 15 and the inner middle mold 17. In some embodiments, the inner mold 113 includes a shoe last. In some embodiments, the polymeric material M1 is injected into the mold cavity 19 to form a layer between the inner mold 113 and the bottom component 34. In some embodiments, a component (or the core component 32) is attached to the inner mold 113, and the polymeric material M1 is injected into the mold cavity 19 to form a layer between the component attached to the inner mold 113 and the bottom component 34. The layer is formed by physical foaming of the polymeric material M1 inside the mold cavity 19.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the scope of the present disclosure, and that they may make various changes, substitutions, and alterations herein without departing from the scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein, may be utilized according to the present disclosure. Accordingly, the appended claims are intended to include within their scope such processes, machines, manufacture, compositions of matter, means, methods and steps.

## Claims

1. An injection molding method, comprising:
providing a molding device, wherein the molding device comprises a first mold, a second mold over the first mold, and a middle mold between the first mold and the second mold;
disposing a first component on the second mold;
engaging the middle mold with the first mold and the second mold to form a mold cavity after the first component is disposed on the second mold;
injecting a polymeric material into the mold cavity to surround the first component; and
obtaining an article formed by the polymeric material and the first component.

2. The injection molding method of Claim 1, wherein the engaging the middle mold with the first mold and the second mold comprises:
moving the middle mold over the first mold; and
disposing the second mold over the middle mold.

3. The injection molding method of Claim 1 or 2, wherein the disposing the first component on the second mold comprises:
fixing the first component on the second mold by a supporting unit,
wherein the supporting unit protrudes from the second mold and is at least partially surrounded by the first component.

4. The injection molding method of Claim 3, further comprising:
retracting the supporting unit into the second mold after the injecting the polymeric material.

5. The injection molding method of any one of Claims 1 to 3, further comprising:
disposing a second component on the first mold before the engaging the middle mold with the first mold and the second mold to form the mold cavity,
wherein the second component is attached to the polymeric material when the polymeric material is injected into the mold cavity.

6. The injection molding method of Claim 5, wherein the disposing the second component on the first mold further comprises:
moving away a first portion and a second portion of the middle mold from each other to expose a recess of the first mold; and
disposing the second component in the recess of the first mold.

7. The injection molding method of Claim 6, wherein the middle mold comprises an outer middle mold including the first and second portions of the middle mold, and an inner middle mold including a first slider and a second slider,
wherein the moving away the first portion and the second portion of the outer middle mold from each other further comprises:
separating the first portion of the outer middle mold from the first slider; and
separating the second portion of the outer middle mold from the second slider.

8. The injection molding method of Claim 7, wherein the engaging the middle mold with the first mold and the second mold further comprises:
engaging the first and second portions of the middle mold after the second component is disposed in the recess of the first mold.

9. The injection molding method of Claim 8, wherein the engaging the first and second portions of the middle mold further comprises:
engaging the first portion of the middle mold with the first slider; and
engaging the second portion of the middle mold with the second slider,
wherein a first mold cavity is defined by the first slider, the first portion of the middle mold, the first mold and the second mold, and a second mold cavity is defined by the second slider, the second portion of the middle mold, the first mold and the second mold.

10. An injection molding system, comprising:
a molding device, comprising a first mold, a second mold over the first mold, and a middle mold between the first mold and the second mold,
wherein the second mold comprises a supporting unit extendable from and retractable into the second mold and facing the first mold,
wherein the middle mold comprises an outer middle mold and an inner middle mold surrounded by and movable relative to the outer middle mold.

11. The injection molding system of Claim 10, further comprising:
a position control mechanism, configured to control movement of the middle mold to engage the middle mold with the first mold and the second mold,
wherein the second mold is moveable toward the middle mold and the first mold by the position control mechanism.

12. The injection molding system of Claim 10 or 11, wherein the outer middle mold includes a first portion and a second portion movable relative to the first portion, and the inner middle mold includes a first slider and a second slider movable relative to the first slider.

13. The injection molding system of Claim 12, wherein the first portion of the outer middle mold is movable relative to the first slider, and the second portion of the outer middle mold is movable relative to the second slider, wherein the first slider and the second slider are movable toward and away from each other.

14. The injection molding system of Claim 12, wherein the first mold comprises a first portion, a second portion and a third portion, and the first portion and the second portion of the first mold are disposed on two opposite sides of the third portion of the first mold, wherein the first slider and the second slider are disposed over the third portion of the first mold and between the first portion and the second portion of the first mold.

15. The injection molding system of Claim 12, wherein the first slider is at least partially surrounded by the first portion of the outer middle mold, and the second slider is at least partially surrounded by the second portion of the outer middle mold.

## Patentansprüche

1. Spritzgießverfahren, aufweisend:
Bereitstellen einer Formvorrichtung, wobei die Formvorrichtung eine erste Form, eine zweite Form über der ersten Form und eine Mittelform zwischen der ersten Form und der zweiten Form aufweist;
Anordnen eines ersten Bauteils auf der zweiten Form;
Ineingriffbringen der Mittelform mit der ersten Form und der zweiten Form, um einen Formhohlraum zu bilden, nachdem das erste Bauteil auf der zweiten Form angeordnet wurde;
Einspritzen eines Polymermaterials in den Formhohlraum derart, dass es das erste Bauteil umschließt; und
Erhalten eines durch das Polymermaterial und das erste Bauteil gebildeten Artikels.

2. Spritzgießverfahren nach Anspruch 1, wobei das Ineingriffbringen der Mittelform mit der ersten Form und der zweiten Form aufweist:
Bewegen der Mittelform über die erste Form; und
Anordnen der zweiten Form über der Mittelform.

3. Spritzgießverfahren nach Anspruch 1 oder 2, wobei das Anordnen des ersten Bauteils auf der zweiten Form aufweist:
Fixieren des ersten Bauteils auf der zweiten Form mittels einer Halteeinheit,
wobei die Halteeinheit von der zweiten Form hervorsteht und zumindest teilweise vom ersten Bauteil umgeben ist.

4. Spritzgießverfahren nach Anspruch 3, ferner aufweisend:
Zurückziehen der Halteeinheit in die zweite Form nach dem Einspritzen des Polymermaterials.

5. Spritzgießverfahren nach einem der Ansprüche 1 bis 3, ferner aufweisend:
Anordnen eines zweiten Bauteils auf der ersten Form, bevor die Mittelform mit der ersten Form und der zweiten Form in Eingriff gebracht wird, um den Formhohlraum zu bilden,
wobei das zweite Bauteil am Polymermaterial befestigt wird, wenn das Polymermaterial in den Formhohlraum eingespritzt wird.

6. Spritzgießverfahren nach Anspruch 5, wobei das Anordnen des zweiten Bauteils auf der ersten Form ferner aufweist:
Auseinanderbewegen eines ersten Abschnitts und eines zweiten Abschnitts der Mittelform, um eine Vertiefung der ersten Form freizulegen; und
Anordnen des zweiten Bauteils in der Vertiefung der ersten Form.

7. Spritzgießverfahren nach Anspruch 6, wobei die Mittelform eine äußere Mittelform, die den ersten und den zweiten Abschnitt der Mittelform aufweist, und eine innere Mittelform aufweist, die ein erstes Gleitelement und ein zweites Gleitelement aufweist,
wobei das Auseinanderbewegen des ersten Abschnitts und des zweiten Abschnitts der äußeren Mittelform ferner aufweist:
Trennen des ersten Abschnitts der äußeren Mittelform vom ersten Gleitelement; und
Trennen des zweiten Abschnitts der äußeren Mittelform vom zweiten Gleitelement.

8. Spritzgießverfahren nach Anspruch 7, wobei das Ineingriffbringen der Mittelform mit der ersten Form und der zweiten Form ferner aufweist:
Ineingriffbringen des ersten und des zweiten Abschnitts der Mittelform, nachdem das zweite Bauteil in der Vertiefung der ersten Form angeordnet ist.

9. Spritzgießverfahren nach Anspruch 8, wobei das Ineingriffbringen des ersten und des zweiten Abschnitts der Mittelform ferner aufweist:
Ineingriffbringen des ersten Abschnitts der Mittelform mit dem ersten Gleitelement; und
Ineingriffbringen des zweiten Abschnitts der Mittelform mit dem zweiten Gleitelement,
wobei ein erster Formhohlraum durch das erste Gleitelement, den ersten Abschnitt der Mittelform, die erste Form und die zweite Form definiert ist und ein zweiter Formhohlraum durch das zweite Gleitelement, den zweiten Abschnitt der Mittelform, die erste Form und die zweite Form definiert ist.

10. Spritzgießsystem, aufweisend:
eine Formvorrichtung, aufweisend eine erste Form, eine zweite Form über der ersten Form und eine Mittelform zwischen der ersten Form und der zweiten Form,
wobei die zweite Form eine Halteeinheit aufweist, die von der zweiten Form herausfahrbar und in diese einfahrbar ist und der ersten Form zugewandt ist,
wobei die Mittelform eine äußere Mittelform und eine innere Mittelform aufweist, die von der äußeren Mittelform umgeben und relativ zu dieser bewegbar ist.

11. Spritzgießsystem nach Anspruch 10, ferner aufweisend:
einen Positionssteuermechanismus, der dafür konfiguriert ist, eine Bewegung der Mittelform zu steuern, um die Mittelform mit der ersten Form und der zweiten Form in Eingriff zu bringen,
wobei die zweite Form durch den Positionssteuermechanismus in Richtung zur Mittelform und zur ersten Form bewegbar ist.

12. Spritzgießsystem nach Anspruch 10 oder 11, wobei die äußere Mittelform einen ersten Abschnitt und einen relativ zum ersten Abschnitt bewegbaren zweiten Abschnitt aufweist und die innere Mittelform ein erstes Gleitelement und ein relativ zum ersten Gleitelement bewegbares zweites Gleitelement aufweist.

13. Spritzgießsystem nach Anspruch 12, wobei der erste Abschnitt der äußeren Mittelform relativ zum ersten Gleitelement bewegbar ist und der zweite Abschnitt der äußeren Mittelform relativ zum zweiten Gleitelement bewegbar ist, wobei das erste Gleitelement und das zweite Gleitelement zueinander hin und voneinander weg bewegbar sind.

14. Spritzgießsystem nach Anspruch 12, wobei die erste Form einen ersten Abschnitt, einen zweiten Abschnitt und einen dritten Abschnitt aufweist, und wobei der erste Abschnitt und der zweite Abschnitt der ersten Form an zwei gegenüberliegenden Seiten des dritten Abschnitts der ersten Form angeordnet sind, wobei das erste Gleitelement und das zweite Gleitelement über dem dritten Abschnitt der ersten Form und zwischen dem ersten Abschnitt und dem zweiten Abschnitt der ersten Form angeordnet sind.

15. Spritzgießsystem nach Anspruch 12, wobei das erste Gleitelement zumindest teilweise vom ersten Abschnitt der äußeren Mittelform umgeben ist und das zweite Gleitelement zumindest teilweise vom zweiten Abschnitt der äußeren Mittelform umgeben ist.

## Revendications

1. Procédé de moulage par injection, comprenant les étapes consistant à :
fournir un dispositif de moulage, dans lequel le dispositif de moulage comprend un premier moule, un deuxième moule par-dessus le premier moule, et un moule du milieu entre le premier moule et le deuxième moule ;
disposer un premier constituant sur le deuxième moule ;
mettre en prise le moule du milieu avec le premier moule et le deuxième moule pour former une cavité de moule après que le premier constituant est disposé sur le deuxième moule ;
injecter un matériau polymère dans la cavité de moule pour entourer le premier constituant ; et
obtenir un article formé par le matériau polymère et le premier constituant.

2. Procédé de moulage par injection selon la revendication 1, dans lequel l'étape consistant à mettre en prise le moule du milieu avec le premier moule et le deuxième moule comprend les étapes consistant à :
déplacer le moule du milieu par-dessus le premier moule ; et
disposer le deuxième moule par-dessus le moule du milieu.

3. Procédé de moulage par injection selon la revendication 1 ou 2, dans lequel l'étape consistant à disposer le premier constituant sur le deuxième moule comprend l'étape consistant à :
fixer le premier constituant sur le deuxième moule à l'aide d'une unité de soutien,
dans lequel l'unité de soutien fait saillie depuis le deuxième moule et est au moins partiellement entourée par le premier constituant.

4. Procédé de moulage par injection selon la revendication 3, comprenant en outre l'étape consistant à :
reculer l'unité de soutien dans le deuxième moule après l'étape consistant à injecter le matériau polymère.

5. Procédé de moulage par injection selon l'une quelconque des revendications 1 à 3, comprenant en outre l'étape consistant à :
disposer un second constituant sur le premier moule avant l'étape consistant à mettre en prise le moule du milieu avec le premier moule et le deuxième moule pour former la cavité de moule,
dans lequel le second constituant est attaché au matériau polymère lorsque le matériau polymère est injecté dans la cavité de moule.

6. Procédé de moulage par injection selon la revendication 5, dans lequel l'étape consistant à disposer le second constituant sur le premier moule comprend en outre l'étape consistant à :
écarter une première partie et une deuxième parties du moule du milieu l'une de l'autre pour exposer un évidement du premier moule ; et
disposer le second constituant dans l'évidement du premier moule.

7. Procédé de moulage par injection selon la revendication 6, dans lequel le moule du milieu comprend un moule du milieu externe incluant les première et deuxième parties du moule du milieu, et un moule du milieu interne incluant un premier élément coulissant et un second élément coulissant,
dans lequel l'étape consistant à écarter la première partie et la deuxième partie du moule du milieu externe l'une de l'autre comprend en outre les étapes consistant à :
séparer la première partie du moule du milieu externe du premier élément coulissant ; et
séparer la deuxième partie du moule du milieu externe du second élément coulissant.

8. Procédé de moulage par injection selon la revendication 7, dans lequel l'étape consistant à mettre en prise le moule du milieu avec le premier moule et le deuxième moule comprend en outre les étapes consistant à :
mettre en prise les première et deuxième parties du moule du milieu après que le second constituant est disposé dans l'évidement du premier moule.

9. Procédé de moulage par injection selon la revendication 8, dans lequel l'étape consistant à mettre en prise les première et deuxième partie du moule du milieu comprend en outre les étapes consistant à :
mettre en prise la première partie du moule du milieu avec le premier élément coulissant ; et
mettre en prise la deuxième partie du moule du milieu avec le second élément coulissant,
dans lequel une première cavité de moule est définie par le premier élément coulissant, la première partie du moule du milieu, le premier moule et le deuxième moule, et une seconde cavité de moule est définie par le second élément coulissant, la deuxième partie du moule du milieu, le premier moule et le deuxième moule.

10. Système de moulage par injection, comprenant :
un dispositif de moulage, comprenant un premier moule, un deuxième moule par-dessus le premier moule, et un moule du milieu entre le premier moule et le deuxième moule,
dans lequel le deuxième moule comprend une unité de soutien pouvant être étendue depuis et reculée dans le deuxième moule et orientée vers le premier moule,
dans lequel le moule du milieu comprend un moule du milieu externe et un moule du milieu interne entouré par et pouvant être déplacé par rapport au moule du milieu externe.

11. Système de moulage par injection selon la revendication 10, comprenant en outre :
un mécanisme de commande de position, conçu pour commander le mouvement du moule du milieu pour mettre en prise le moule du milieu avec le premier moule et le deuxième moule,
dans lequel le deuxième moule peut être déplacé vers le moule du milieu et le premier moule par le mécanisme de commande de position.

12. Système de moulage par injection selon la revendication 10 ou 11, dans lequel le moule du milieu externe inclut une première partie et une deuxième partie pouvant être déplacée par rapport à la première partie, et le moule du milieu interne inclut un premier élément coulissant et un second élément coulissant pouvant être déplacé par rapport au premier élément coulissant.

13. Système de moulage par injection selon la revendication 12, dans lequel la première partie du moule du milieu externe peut être déplacée par rapport au premier élément coulissant, et la deuxième partie du moule du milieu externe peut être déplacée par rapport au second élément coulissant, dans lequel le premier élément coulissant et le second élément coulissant peuvent être déplacés dans la direction et de manière à s'éloigner l'un de l'autre.

14. Système de moulage par injection selon la revendication 12, dans lequel le premier moule comprend une première partie, une deuxième partie et une troisième partie, et la première partie et la deuxième partie du premier moule sont disposées sur deux côtés opposés de la troisième partie du premier moule, dans lequel le premier élément coulissant et le second élément coulissant sont disposés par-dessus la troisième partie du premier moule et entre la première partie et la deuxième partie du premier moule.

15. Système de moulage par injection selon la revendication 12, dans lequel le premier élément coulissant est au moins partiellement entouré par la première partie du moule du milieu externe, et le second élément coulissant est au moins partiellement entouré par la deuxième partie du moule du milieu externe.
